# EUROPEAN PATENT APPLICATION

(11) **EP 4 787 517 A1**
(43) Date of publication of application: **05.08.2026**
(21) Application number: 26151446.7
(22) Date of filing: 13.01.2026
(51) Int. Cl.: H01M 10/04, H01M 10/0525, H01M 10/058, H01M 50/184, H01M 50/186, H01M 50/289, H01M 50/291, H01M 50/55, H01M 50/584, H01M 50/593

(54) **SECONDARY BATTERY AND METHOD OF MANUFACTURING SECONDARY BATTERY**

(30) Priority: 31.01.2025 KR 20250012546
(71) Applicant: SAMSUNG SDI CO., LTD., Yongin-si, Gyeonggi-do 17084 (KR)
(72) Inventor: LEE, Hyun-Soo, Suwon-si, Gyeonggi-do 16678 (KR)
(74) Representative: Gulde & Partner

(57) **Abstract**

A secondary battery and a method of manufacturing a secondary battery are disclosed. A secondary battery includes an electrode assembly including an electrode tab, a case in which the electrode assembly is accommodated, a connection member electrically connected to the electrode tab, a side terminal electrically connected to the connection member, a cap plate coupled to an opening of the case and through which the side terminal passes, a first insulator insulating the cap plate from the connecting member, and a first bonding part bonding the first insulator and the cap plate.

## Description

### BACKGROUND

### 1. Field

Aspects of embodiments of the present disclosure relate to a secondary battery and a method of manufacturing a secondary battery.

### 2. Description of the Related Art

Generally, with the recent rapid spread of electronic apparatuses using batteries, such as mobile phones, laptop computers, electric vehicles, and the like, recently, the demand for secondary battery having high energy density and high capacity is rapidly increasing. Accordingly, research and development to improve the performance of lithium secondary batteries is actively being conducted.

Lithium secondary batteries are batteries that include a positive electrode and a negative electrode containing active materials capable of intercalation and deintercalation of lithium ions and an electrolyte, and the lithium secondary batteries generate electrical energy through oxidation and reduction reactions when lithium ion is intercalated/deintercalated into/from the positive and negative electrodes.

The above-described information disclosed in the technology that forms the background of the present disclosure is provided to improve understanding of the background of the present disclosure, and thus may include information that does not constitute the related art.

### SUMMARY

The invention is defined by the appended claims. The description that follows is subjected to this limitation. Any disclosure lying outside the scope of said claims is only intended for illustrative as well as comparative purposes. According to an aspect of embodiments of the present invention, a secondary battery and a method of manufacturing a secondary battery, which may simplify an assembly process and improve insulation reliability by integrating an insulator for insulating a cap plate and an electrode assembly using thermal fusion to eliminate unnecessary processes, are provided.

The above and other aspects and features of the present disclosure will be described in or will be apparent from the following description of some embodiments of the present disclosure.

According to one or more embodiments of the present disclosure, a secondary battery includes: an electrode assembly including an electrode tab; a case in which the electrode assembly is accommodated; a connection member electrically connected to the electrode tab; a side terminal electrically connected to the connection member; a cap plate coupled to an opening of the case and through which the side terminal passes; a first insulator configured to insulate the cap plate from the connecting member; and a first bonding part configured to bond the first insulator and the cap plate, wherein the first bonding part comprises: a first concave groove in the cap plate and a first protrusion protruding from the first insulator and being inserted into the first concave groove.

In an embodiment, the first concave groove may have a (e.g. tapered) shape that becomes wider in an insertion direction of the first protrusion. In other words, the first concave groove may have a shape that tapers (narrows) towards the opening of first concave groove.

Preferably, a volume of the first protrusion may be smaller than or equal to an inner volume of the first concave groove.

Further preferred, an entrance width of the first concave groove may be smaller than an inner width of the first concave groove.

In an embodiment, the first insulator may comprise an accommodation groove configured to accommodate a portion of the first protrusion.

Preferably, the cap plate may comprise a protrusion at the edge of the first concave groove and the protrusion being inserted into the accommodation groove of the first insulator.

In another embodiment, the side terminal may comprise: a boss terminal arranged on the connection member and passing through the cap plate; and an external terminal on an outside of the cap plate and welded to the boss terminal, and a second insulator is between the side terminal and the cap plate.

Preferably, the second insulator may be bonded by a second bonding part, and the second bonding part comprises: a second concave groove in the external terminal and a third concave groove in the cap plate positioned to face the second concave groove, a second protrusion protruding from the second insulator and being inserted into the second concave groove; and a third protrusion protruding from the second insulator and being inserted into the third concave groove.

Further preferred, the boss terminal and the external terminal may comprise tapered portions corresponding to each other.

Another aspect of the present invention relates to a method of manufacturing the secondary battery as described in one or more of the embodiments above. The method comprises: forming a first concave groove in a cap plate; bonding a first insulator to the cap plate; and bonding the cap plate and a side terminal, wherein the bonding of the first insulator to the cap plate comprises: inserting a first protrusion of the first insulator into the first concave groove, then melting the first protrusion to fill the first concave groove, and subsequent cooling to harden the inserted first protrusion.

Preferably, the forming of the first concave groove may comprise: forming a linear groove in a lower surface of the cap plate; and forming an entrance width of the linear groove to be narrower by ring processing of an outside of the linear groove.

Preferably, before inserting the first protrusion, the method may comprise: providing the first protrusion, the first protrusion being longer than a depth of the first concave groove.

In another preferred implementation of the method, the side terminal comprises a boss terminal on a connection member by passing through the cap plate, and an external terminal positioned on an outside of the cap plate and bonded to the boss terminal, and the bonding the cap plate and the side terminal comprises: forming a second concave groove in the external terminal and forming a third concave groove in the cap plate positioned to face the second concave groove; inserting a second protrusion of a second insulator into the second concave groove and inserting a third protrusion into the third concave groove; melting the second protrusion and the third protrusion to fill the second concave groove and the third concave groove, respectively; subsequent cooling to harden the inserted second and third protrusion; and welding the boss terminal and the external terminal.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings:
- FIG. 1: is a perspective view schematically illustrating a configuration of a battery pack according to one or more embodiments of the present invention;
- FIG. 2: is a perspective view schematically illustrating a configuration of a secondary battery according to an embodiment of the present invention;
- FIG. 3: is an exploded perspective view schematically illustrating the configuration of the secondary battery of FIG. 2;
- FIG. 4: is a cross-sectional view taken along the line IV-IV of FIG. 2;
- FIG. 5: is a view schematically illustrating a configuration of an electrode assembly according to an embodiment of the present invention;
- FIG. 6: is a cross-sectional view illustrating a configuration of a main part of the secondary battery according to an embodiment of the present invention;
- FIG. 7: is a view schematically illustrating the formation of a first concave groove of a cap plate according to an embodiment of the present invention;
- FIG. 8: is a view illustrating various shapes of the first concave groove of the secondary battery according to an embodiment of the present invention;
- FIG. 9: is a view schematically illustrating bonding of a first bonding part of the secondary battery according to an embodiment of the present invention;
- FIG. 10: is a view illustrating thermal fusion of the first bonding part of the secondary battery according to an embodiment of the present invention by a heater rod;
- FIG. 11: is a view illustrating thermal fusion of the first bonding part of the secondary battery according to an embodiment of the present invention by ultrasonic welding;
- FIG. 12: is a view illustrating thermal fusion of the first bonding part of the secondary battery according to an embodiment of the present invention by laser welding;
- FIG. 13: is a cross-sectional view illustrating a thermally fused state of the first bonding part of the secondary battery according to an embodiment of the present invention;
- FIG. 14: is a photograph of a first concave groove of a cap plate according to an embodiment of the present invention;
- FIG. 15: is a perspective view schematically illustrating a first protrusion of a secondary battery according to another embodiment of the present invention;
- FIG. 16: is a view schematically illustrating bonding of a first bonding part of the secondary battery of FIG. 15;
- FIG. 17: is a cross-sectional view schematically illustrating a modified example of the first protrusion according to an embodiment of the present invention;
- FIG. 18: is a cross-sectional view illustrating a thermally fused state of the first bonding part of the secondary battery according to an embodiment of the present invention;
- FIG. 19: is a cross-sectional view schematically illustrating a first bonding part of a secondary battery according to another embodiment of the present invention;
- FIG. 20: is a view schematically illustrating formation of a first concave groove of the secondary battery of FIG. 19;
- FIG. 21: is a view schematically illustrating bonding of the first bonding part of the secondary battery according to an embodiment of the present invention;
- FIG. 22: is a cross-sectional view illustrating a thermally fused state of the first bonding part of the secondary battery according to an embodiment of the present invention; and
- FIG. 23: is a flowchart schematically illustrating a method of manufacturing a secondary battery according to one or more embodiments of the present invention.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the aspects and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

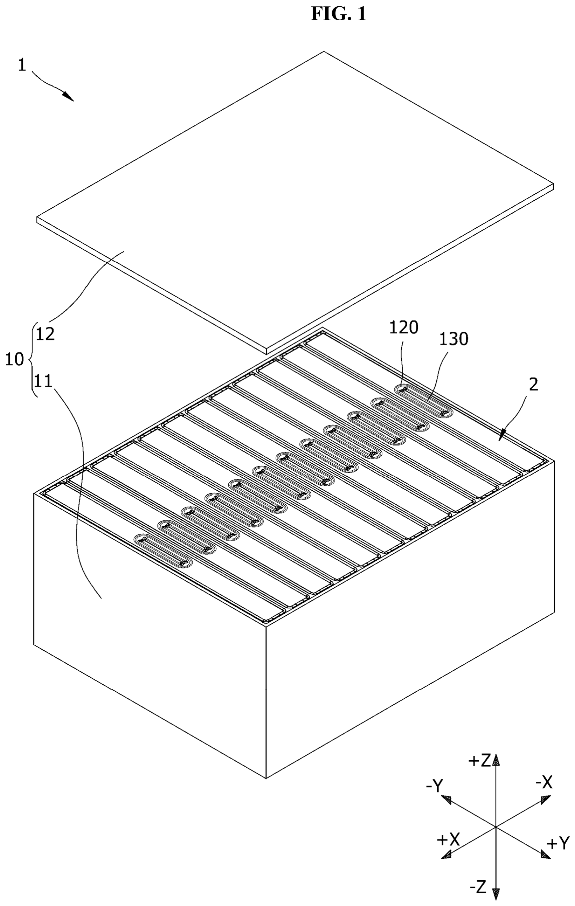

FIG. 1 is a perspective view schematically illustrating a configuration of a battery pack according to an embodiment of the present invention.

Referring to FIG. 1, the battery pack according to an embodiment of the present invention may include a housing 1 and a secondary battery 2.

The housing 1 may generally form an exterior of the battery pack and provide a space in which the secondary battery 2 may be accommodated.

The housing 1 according to an embodiment may include a housing body 11 and a cover 12.

The housing body 11 may have a shape of a box with an empty interior and an open side. However, a cross-sectional shape of the housing body 11 is not limited to the rectangular shape illustrated in FIG. 1 and may have any of various shapes, such as polygonal, circular, oval, or other shapes.

The cover 12 may be coupled to the housing body 11 and may close an internal space of the housing body 11. In an example, the cover 12 may be formed to have a generally plate shape and may be disposed to face the open side of the housing body 11. The cover 12 may be fixed to the housing body 11 by any of various types of coupling methods, such as bolting, welding, fitting, etc.

The secondary battery 2 may function as a unit structure which stores and supplies power in the battery pack.

The secondary battery 2 may be disposed in the housing 1. A plurality of secondary batteries 2 may be provided. The plurality of secondary batteries 2 may be arranged in two or more rows in at least one of a longitudinal direction (+X-axis direction based on FIG. 1) and a width direction (+ Y-axis direction based on FIG. 1) of the housing 1. FIG. 1 illustrates that the plurality of secondary batteries 2 are arranged in twelve rows in the longitudinal direction of the housing 1, but an arrangement of the plurality of secondary batteries 2 is not limited thereto and may have any of various forms. The plurality of secondary batteries 2 may be arranged parallel to each other. The number of secondary batteries 2 may be designed in any of various ways depending on the size, shape, and the like of the housing 1.

The plurality of secondary batteries 2 may be electrically connected to each other. As an example, neighboring secondary batteries 2 may be connected in series or in parallel by a bus bar. The bus bar may be formed of an electrically conductive material, such as copper, aluminum, nickel, or the like. A specific shape of the bus bar may be any of various shapes capable of electrically connecting neighboring secondary batteries 2.

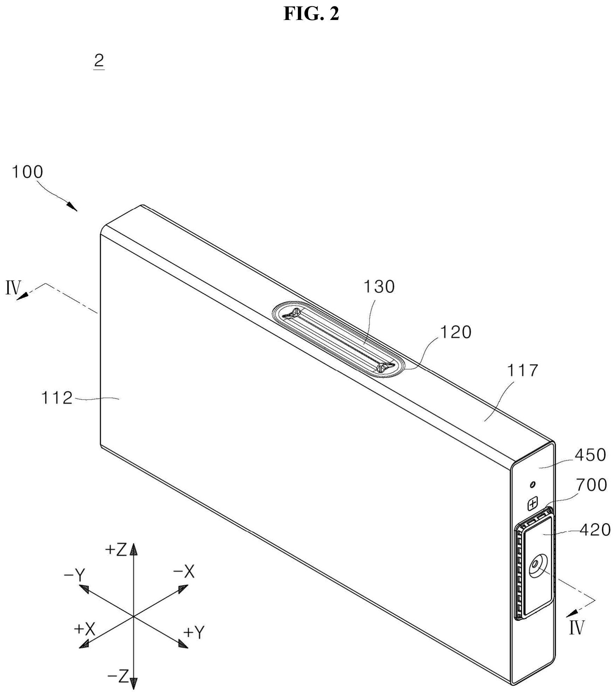

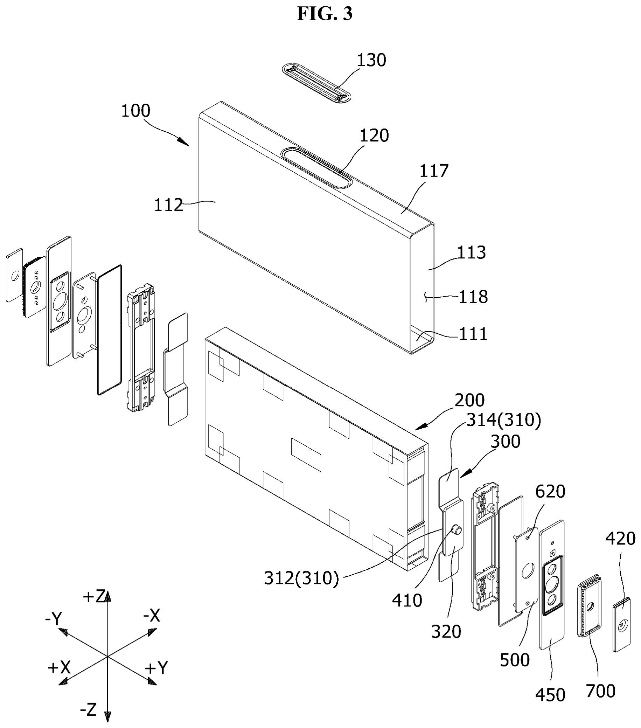

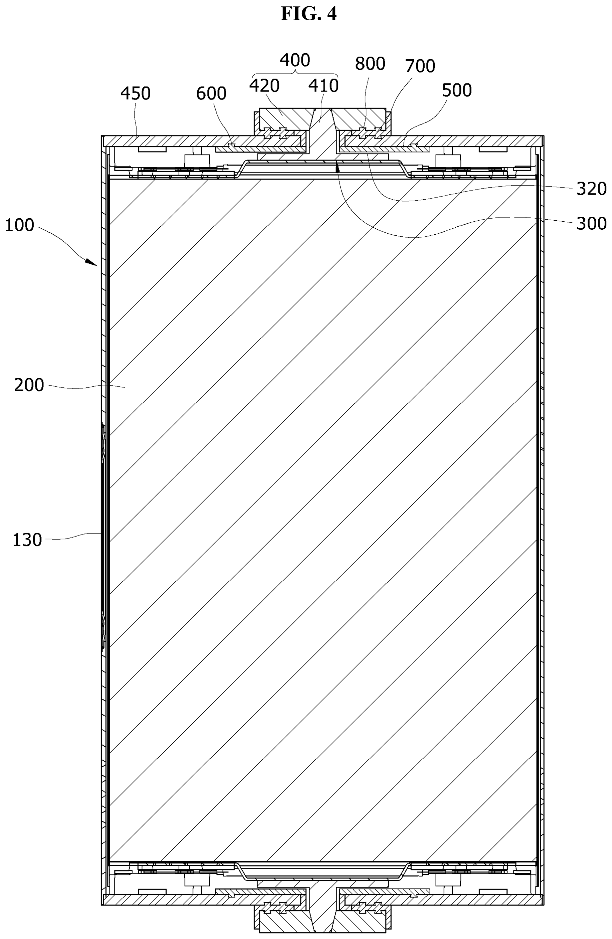

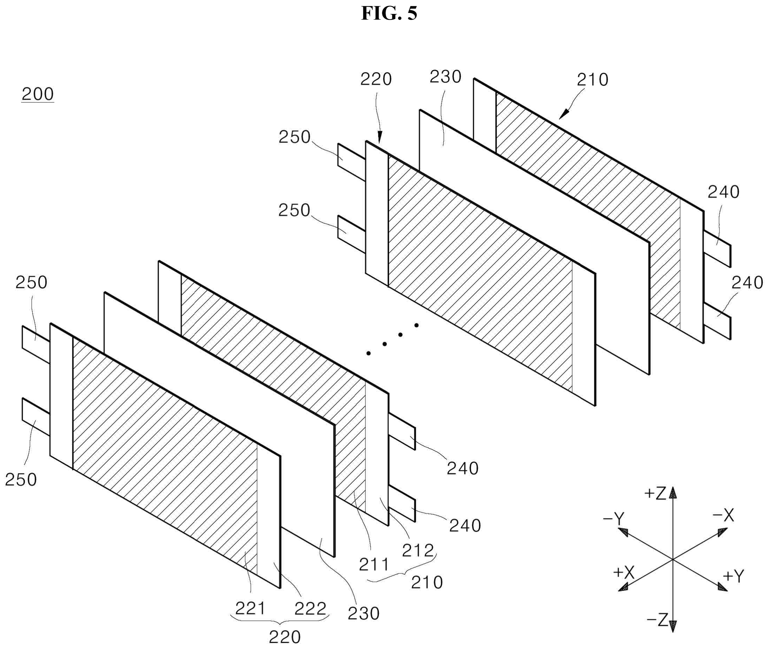

FIG. 2 is a perspective view schematically illustrating a configuration of a secondary battery according to an embodiment of the present invention; FIG. 3 is an exploded perspective view schematically illustrating the configuration of the secondary battery of FIG. 2; FIG. 4 is a cross-sectional view taken along the line IV-IV of FIG. 2; and FIG. 5 is a view schematically illustrating a configuration of an electrode assembly according to an embodiment of the present invention.

A first direction described below may refer to a -X-axis direction based on FIGS. 2 and 3, a second direction may refer to a +Y-axis direction based on FIGS. 2 and 3, and a third direction may refer to a -Z-axis direction based on FIGS. 2 and 3.

Herein, an example in which the secondary battery 2 is a prismatic lithium ion secondary battery will be described. However, the present disclosure is not limited thereto, and the secondary battery may be a lithium polymer battery or a cylindrical battery, for example.

Referring to FIGS. 2 to 5, the secondary battery 2 according to an embodiment may include an electrode assembly 200, a case 100, a connection member 300, a side terminal 400, a cap plate 450, and a first insulator 500.

The electrode assembly 200 may include an electrode plate and an electrode tab. The electrode plate may include a positive electrode plate 210 and a negative electrode plate 220, and the electrode tab may include a positive electrode tab 240 and a negative electrode tab 250.

The positive electrode plate 210 may function as a positive electrode of the electrode assembly 200.

The positive electrode plate 210 according to an embodiment may have a shape of a foil including a metal material, such as aluminum or an aluminum alloy. Both, or opposite, surfaces of the positive electrode plate 210 may be disposed perpendicular to the first direction. A type, size, shape, or the like of the positive electrode plate 210 is not particularly limited as long it has conductivity and does not cause a chemical change in the secondary battery 2. A cross-sectional shape of the positive electrode plate 210 may have any of various shapes in addition to the rectangular shape illustrated in FIG. 5.

A plurality of positive electrode plates 210 may be provided. The plurality of positive electrode plates 210 may be arranged between a front surface portion 112 and a rear surface portion 113 of the case 100 in the first direction. A number of positive electrode plates 210 may be varied depending on a charging capacity and/or the like of the secondary battery 2.

The positive electrode plate 210 may include a first active material layer 211 and a first uncoated portion 212.

The first active material layer 211 may be provided in a form of being applied on at least a portion of the positive electrode plate 210. The first active material layer 211 may be applied on both, or opposite, surfaces of the positive electrode plate 210, or may be applied on only one surface of the positive electrode plate 210.

In an embodiment, the positive electrode plate 210 functions as a positive electrode, and the first active material layer 211 may include a positive electrode active material.

The positive electrode active material may be a compound capable of reversible intercalation and deintercalation of lithium (lithiated intercalation compound). In an embodiment, one or more of composite oxides of lithium and a metal selected from cobalt, manganese, nickel, and a combination thereof may be used.

In an example, the positive electrode active material may include at least one of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM). Here, 0<x<1, 0<y<1, 0<z<1, and x+y+z=1 may be satisfied. The positive electrode active material may include only one of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM), and may include any two or all of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM).

The first active material layer 211 may further include a positive electrode conductive material.

The positive electrode conductive material imparts conductivity to the first active material layer 211, and any suitable material which does not cause a chemical change and is electronically conductive may be used. Examples of the positive electrode conductive material may include a carbon-based material, such as natural graphite, artificial graphite, carbon black, acetylene black, Ketjen black, carbon fibers, carbon nanofibers, and carbon nanotubes, a metal-based material in the form of a metal powder or metal fiber containing copper, nickel, aluminum, silver, etc., a conductive polymer, such as a polyphenylene derivative, or a mixture thereof.

The first active material layer 211 may further include a positive electrode binder.

The positive electrode binder may attach the particles constituting the positive electrode active material to each other well, and also attach the positive electrode active material to the positive electrode plate 210 well.

An example of the positive electrode binder may include a non-aqueous binder, an aqueous binder, a dry binder, or a combination thereof.

Examples of the non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

If the aqueous binder is used as the positive electrode binder, a cellulose-based compound may be further contained to impart viscosity. The cellulose-based compound may be used by mixing one or more of carboxymethyl cellulose, hydroxypropyl methyl cellulose, methyl cellulose, or alkali metal salts thereof. In an embodiment, as the alkali metal, Na, K, or Li may be used.

The dry binder may be a polymeric material capable of being fiberized, for example, polytetrafluoroethylene, polyvinylidene fluoride, a polyvinylidene fluoridehexafluoropropylene copolymer, polyethylene oxide, or a combination thereof.

The positive electrode plate 210 may include the first uncoated portion 212 on which the first active material layer 211 is not applied. The first uncoated portion 212 according to an embodiment may be disposed at an end region of the positive electrode plate 210 disposed to face an opening 118 of the case 100. However, a form of the first uncoated portion 212 is not limited thereto, and, in an embodiment, the first uncoated portion 212 may be formed over an entire edge region of the positive electrode plate 210.

The negative electrode plate 220 may function as a negative electrode of the electrode assembly 200.

The negative electrode plate 220 according to an embodiment may have a shape of a foil including a metal material, such as copper, a copper alloy, nickel, or a nickel alloy. Both, or opposite, surfaces of the negative electrode plate 220 may be disposed perpendicular to the first direction. A type, size, shape, etc. of the negative electrode plate 220 are not particularly limited as long as the negative electrode plate 220 has conductivity without causing a chemical change in the secondary battery. A cross-sectional shape of the negative electrode plate 220 may have any of various shapes in addition to the rectangular shape shown in FIG. 5.

A plurality of negative electrode plates 220 may be provided. The plurality of negative electrode plates 220 may be arranged between the front surface portion 112 and the rear surface portion 113 of the case 100 in the first direction. The plurality of positive electrode plates 210 and negative electrode plates 220 may be alternately disposed in the first direction. The positive electrode plate 210 and the negative electrode plate 220 may be spaced by a distance (e.g., a predetermined distance) apart from each other in the first direction.

The negative electrode plate 220 and the positive electrode plate 210 may be disposed to face each other in the first direction.

The negative electrode plate 220 may include a second active material layer 221 and a second uncoated portion 222.

The second active material layer 221 may be provided in a form of being applied on at least a portion of the negative electrode plate 220. The second active material layer 221 may be applied on both, or opposite, surfaces of the negative electrode plate 220, or may be applied on only one surface of the negative electrode plate 220.

In an embodiment, the negative electrode plate 220 functions as a negative electrode, and the second active material layer 221 may include a negative electrode active material.

The negative electrode active material may include a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite, such as amorphous, plate-like, flaky, spherical, or fibrous natural graphite or artificial graphite, and examples of the amorphous carbon may include soft carbon or hard carbon, mesophase pitch carbide, calcined coke, and the like.

In an embodiment, as the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or Sn-based negative electrode active material may be used. The Si-based negative electrode active material may include silicon, a silicon-carbon composite, SiOx (0<x≤2), a Si-Q alloy (where Q is selected from alkali metals, alkaline earth metals, group 13 elements, group 14 elements (excluding Si), group 15 elements, group 16 elements, transition metals, rare earth elements, and a combination thereof), or a combination thereof. The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in the form of silicon particles of which surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles, and, for example, the silicon primary particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with the carbon-based negative electrode active material.

The second active material layer 221 may further include a negative electrode conductive material and a negative electrode binder.

The negative electrode conductive material imparts conductivity to the second active material layer 221, and any suitable material which does not cause a chemical change and is electronically conductive may be used. Examples of the negative electrode conductive material may include a carbon-based material, such as natural graphite, artificial graphite, carbon black, acetylene black, Ketjen black, carbon fibers, carbon nanofibers, and carbon nanotubes, a metal-based material in the form of a metal powder or metal fiber containing copper, nickel, aluminum, silver, etc., a conductive polymer, such as a polyphenylene derivative, or a mixture thereof.

The negative electrode binder may attach particles constituting the negative electrode active material to each other well and also attach the negative electrode active material to the negative electrode plate 220 well.

An example of the negative electrode binder may include a non-aqueous binder, an aqueous binder, a dry binder, or a combination thereof.

Examples of the non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

If the aqueous binder is used as the negative electrode binder, a cellulose-based compound may be further contained to impart viscosity. The cellulose-based compound may be used by mixing one or more of carboxymethyl cellulose, hydroxypropyl methyl cellulose, methyl cellulose, or alkali metal salts thereof. In an embodiment, as the alkali metal, Na, K, or Li may be used.

The dry binder may be a polymeric material capable of being fiberized, for example, polytetrafluoroethylene, polyvinylidene fluoride, a polyvinylidene fluoridehexafluoropropylene copolymer, polyethylene oxide, or a combination thereof.

The negative electrode plate 220 may include a second uncoated portion 222 on which the second active material layer 221 is not applied. The second uncoated portion 222 according to an embodiment may be disposed at another end region of the negative electrode plate 220 disposed to face a second side surface 115 in the case 100. However, the form of the second uncoated portion 222 is not limited thereto, and, in an embodiment, the second uncoated portion 222 may be formed over an entire edge region of the negative electrode plate 220.

A separator 230 may be disposed between the positive electrode plate 210 and the negative electrode plate 220. The separator 230 may prevent or substantially prevent a short circuit between the positive electrode plate 210 and the negative electrode plate 220 while allowing lithium ions to move between the positive electrode plate 210 and the negative electrode plate 220.

In an embodiment, the separator 230 may be disposed to entirely cover a surface region of the electrode assembly 200. Accordingly, the separator 230 may prevent or substantially prevent the positive electrode plate 210 and the negative electrode plate 220 from being directly exposed to the outside of the electrode assembly 200.

As the separator 230, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may be used.

The separator 230 may include a porous substrate and a coating layer containing an organic material, an inorganic material, or a combination thereof located on one surface or both, or opposite, surfaces of the porous substrate.

The porous substrate may be a polymer film formed of any polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more thereof.

The organic material may include a polyvinylidene fluoride-based polymer or a (meth)acrylic-based polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and a combination thereof, but is not limited thereto.

The organic material and the inorganic material may be present as a mixture in a single coating layer or may be present in a form in which a coating layer including an organic material and a coating layer including an inorganic material are stacked.

The positive electrode tab 240 may be connected to the positive electrode plate 210. The positive electrode tab 240 may provide an electrical connection between the positive electrode plate 210 and the connection member 300 to be described below.

A plurality of positive electrode tabs 240 may be provided. Each of the positive electrode tabs 240 may extend from a different positive electrode plate 210 in the second direction. The plurality of positive electrode tabs 240 may be stacked in the first direction.

The positive electrode tab 240 may be bent in the first direction. That is, an end portion of the positive electrode tab 240 may have a shape that is bent in the first direction. Accordingly, the positive electrode tab 240 may increase a contact area with a sub plate 310 of the connection member 300 to be described below. The positive electrode tab 240 may be bent in a direction from the front surface portion 112 to the rear surface portion 113 and a direction from the rear surface portion 113 to the front surface portion 112 inside the case 100.

As the positive electrode tab 240 is bent in the first direction, a sum of thicknesses of the plurality of positive electrode tabs 240 stacked in the first direction may be greater than the thickness of the electrode assembly 200 parallel to the first direction. In an embodiment, among the plurality of positive electrode tabs 240 stacked in the first direction, ends of some positive electrode tabs 240 positioned relatively close to the rear surface portion 113 may protrude from the electrode assembly 200 toward the rear surface portion 113.

The negative electrode tab 250 may be connected to the negative electrode plate 220. The negative electrode tab 250 may provide an electrical connection between the negative electrode plate 220 and the connection member 300 to be described below.

A plurality of negative electrode tabs 250 may be provided. Each of the negative electrode tabs 250 may extend from a different negative electrode plate 220 in a direction opposite to the second direction. The plurality of negative electrode tabs 250 may be stacked in the first direction.

The negative electrode tab 250 may be bent in a direction opposite to the first direction. That is, an end portion of the negative electrode tab 250 may have a shape that is bent in the direction opposite to the first direction. Accordingly, the negative electrode tab 250 may increase a contact area with the sub plate 310 of the connection member 300 to be described below. The negative electrode tab 250 may be bent in the direction from the rear surface portion 113 toward the front surface portion 112 and the direction from the front surface portion 112 toward the rear surface portion 113 inside the case 100.

As the negative electrode tab 250 is bent in the direction opposite to the first direction, a sum of thicknesses of the plurality of negative electrode tabs 250 stacked in the first direction may be greater than the thickness of the electrode assembly 200 parallel to the first direction. In an embodiment, among the plurality of negative electrode tabs 250 stacked in the first direction, ends of some negative electrode tabs 250 positioned relatively close to the front surface portion 112 may protrude from the electrode assembly 200 toward the front surface portion 112.

The case 100 according to an embodiment may include a bottom portion 111, the front surface portion 112, the rear surface portion 113, a top portion 117, and the opening 118. That is, in an embodiment, the case 100 has a rectangular parallelepiped shape and may be formed as a hollow structure with openings 118 on both, or opposite, sides.

The top portion 117 may form an exterior of an upper side of the case 100. The top portion 117 according to an embodiment may have a rectangular plate shape. The top portion 117 may be disposed to face the bottom portion 111 in the third direction. The top portion 117 may be spaced by a distance (e.g., a predetermined distance) apart from the bottom portion 111 in a direction opposite to the third direction.

The electrode tabs of the electrode assembly 200 may be disposed toward each opening 118.

The case 100 according to an embodiment may further include a vent hole 120 and a vent 130.

The vent hole 120 according to an embodiment may have a shape of a hole vertically passing through the top portion 117 in the third direction. The vent hole 120 may provide a path through which flames, gas, smoke, or the like formed in the case 100 may be discharged to the outside of the case 100 if thermal runaway of the secondary battery occurs due to an overcurrent or the like. A cross-sectional shape of the vent hole 120 may have any of various shapes, such as any of an oval shape, a circular shape, a polygonal shape, and the like.

The vent 130 may be installed in the vent hole 120 and opened and closed in response to a change in internal pressure of the case 100. That is, the vent 130 may prevent or substantially prevent an electrolyte and the like in the case 100 from leaking out of the case 100 or moisture, foreign substances, and the like from entering the case 100 by closing the vent hole 120 when the secondary battery normally operates. The vent 130 may induce flames, gas, smoke, or the like formed in the case 100 to be discharged to the outside of the case 100 by opening the vent hole 120 if thermal runaway of the secondary battery occurs.

The vent 130 according to an embodiment may be formed to have a generally plate shape. The vent 130 may be fixed to the top portion 117 of the case 100 by any of various types of coupling methods, such as welding, bolting, fitting, and the like.

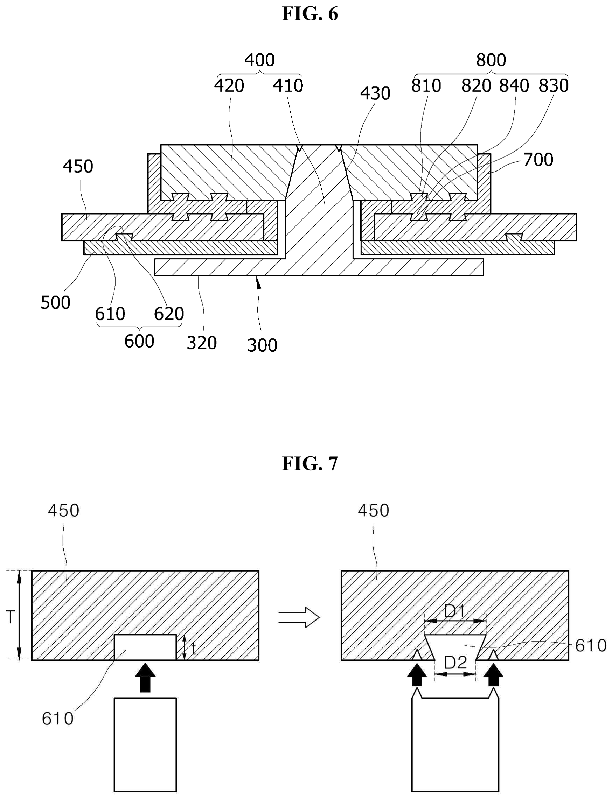

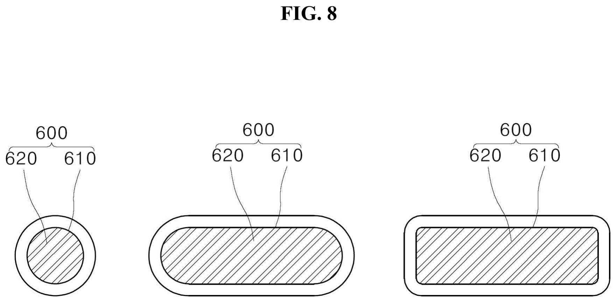

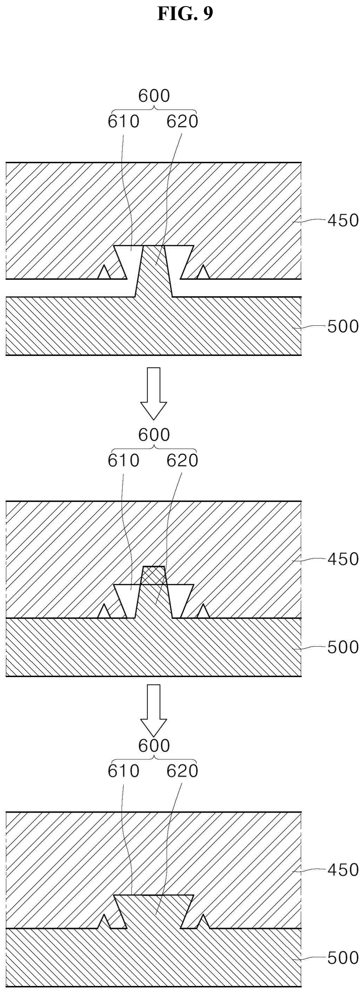

FIG. 6 is a cross-sectional view illustrating a configuration of a main part of the secondary battery according to an embodiment of the present invention; FIG. 7 is a view schematically illustrating a formation of a first concave groove of a cap plate according to an embodiment of the present invention; FIG. 8 is a view illustrating various shapes of the first concave groove of the secondary battery according to an embodiment of the present invention; and FIG. 9 is a view schematically illustrating the bonding of a first bonding part of the secondary battery according to an embodiment of the present invention.

Referring to FIGS. 6 to 9, the connection member 300 according to an embodiment may include the sub plate 310 which is in contact with and coupled to the electrode tab of the electrode assembly 200 and a current collector 320 which is joined to the sub plate 310 by welding at an end and joined to the side terminal 400 by welding.

In an embodiment, a pair of connection members 300 may be provided. The connection members 300 are configured to come into contact with and be coupled to the electrode tab 202 and may be provided on both, or opposite, sides of the case 100 and coupled to the positive electrode tab 240 and the negative electrode tab 250, respectively.

The sub plate 310 may form an exterior of a side of the connection member 300 and may be connected to the electrode tab 202. The sub plate 310 may include a center plate 312 and side plates 314 extending from the center plate 312 on both, or opposite, sides.

In an embodiment, the center plate 312 may form a central exterior of the sub plate 310 and may entirely support the side plates 314 on both, or opposite, sides. The center plate 312 may be formed to have a generally flat plate shape. In an embodiment, the side plate 314 and the electrode tab 202 may be joined together by laser welding or ultrasonic welding. Accordingly, a welding line connected to the electrode tab 202 may be formed on the side plate 314 and the welding line may concurrently (e.g., simultaneously) fix the plurality of stacked electrode tabs 202 to the side plate 314.

The current collector 320 according to an embodiment may be formed of a material that can conduct current, such as aluminum, copper, or nickel. The current collector 320 may be disposed between the electrode assembly 200 and the cap plate 450 to face each other.

A side of the current collector 320 may be connected to the sub plate 310. For example, the current collector 320 may be connected to an upper end portion of the center plate 312. The current collector 320 may be connected by any of various coupling methods, such as welding and bolting.

The side terminal 400 according to an embodiment may be electrically connected to the connection member 300. In an embodiment, the side terminal 400 may include a boss terminal 410 formed on the connection member 300 to pass through the cap plate 450, and an external terminal 420 positioned on an outside of the cap plate 450 and welded to the boss terminal 410.

In an embodiment, a pair of side terminals 400 may be provided. The side terminals 400 are coupled to the connection members 300 and may be provided at both, or opposite, sides of the case 100 to be electrically connected to the positive electrode tab 240 and the negative electrode tab 250 through the connection members 300, respectively.

The boss terminal 410 may be integrally formed to protrude from the central portion of the current collector 320. The boss terminal 410 may be connected to the external terminal 420 disposed on the outside of the cap plate 450. For example, the boss terminal 410 may pass through the cap plate 450 and come into contact with a lower end portion of the external terminal 420. An upper surface of the boss terminal 410 may be connected to the lower end portion of the external terminal 420 by any of various coupling methods, such as welding, bolting, and the like.

Corresponding tapered portions 430 are formed in the boss terminal 410 and the external terminal 420, and a contact surface may be formed wide by the tapered portions 430, thereby improving electrical connection reliability.

The cap plate 450 according to an embodiment may seal the opening 118. In an embodiment, the cap plates 450 may include a pair to seal both, or opposite, openings 118 of the case 100.

The cap plate 450 according to an embodiment may have a flat plate shape. The cap plate 450 may be disposed in the opening 118 of the case 100. The cap plate 450 may be disposed to face the electrode tab 202 of the electrode assembly 200. In an embodiment, an edge region of the cap plate 450 may be coupled to an end portion of each of the bottom portion 111, the front surface portion 112, the rear surface portion 113, and the top portion 117 by any of various coupling methods, such as welding, bolting, fitting, and the like.

The first insulator 500 according to an embodiment may insulate the cap plate 450 from the connection member 300. The first insulator 500 may have a generally flat plate shape.

In an embodiment, the first insulator 500 may be formed of an insulating material, such as polyethylene (PE), polypropylene (PP), polyethylene terephthalate (PET), rubber, or the like.

The first insulator 500 and the cap plate 450 may be bonded by a first bonding part 600. For example, the first bonding part 600 may include a first concave groove 610 formed in the cap plate 450 and a first protrusion 620 formed on the first insulator 500 to be inserted into the first concave groove 610 and melted to fill the first concave groove 610.

The first concave groove 610 may be formed in a shape that becomes wider in an insertion direction of the first protrusion 620, and the first protrusion 620 may be formed longer than the depth of the first concave groove 610.

In further detail, the first concave groove 610 may be formed in the lower surface of the cap plate 450 and the first protrusion 620 may be formed on the upper surface of the first insulator 500. The first protrusion 620 may consist of a resin, preferably a thermosetting or thermoplastic resin, most preferably a thermoplastic resin. This may allow inserting into, melting, and solidifying the first protrusion inside the first concave groove 610 in order to secure and reinforce the bond between the cap plate 450 and the first insulator 500.

Referring to FIG. 7, the formation of the first concave groove 610 is described. As illustrated, an entrance width D2 of the first concave groove 610 may be formed to be smaller than an inner width D1 of the first concave groove 610, for example, obtained through secondary ring processing on the outside of a linear groove after primary linear groove processing. The term (primary) linear groove may refer to a groove, wherein the wall portion of the groove is orthogonal to the base portion of the groove. In contrast, the shape of the first concave groove 610 may have a conical (tapered) shape which tapers towards the opening (entrance) of the first concave groove 610. That is, the entrance width D2 (e.g. a diameter) of the opening (e.g. the entrance) of the first concave groove 610 is smaller than the inner width D1 (e.g. the diameter of the base) D1 of the first concave groove 610. The tapered shape of the first concave groove 610 may be achieved by secondary ring processing on the outside of the linear groove after primary linear groove processing. The secondary ring processing may comprise pressing a wedge-shaped groove on the outside of the linear groove into the cap plate 450 and thereby forming a protrusion 640 (being the edge of the linear groove) and pushing said protrusion 640 towards the center of the linear groove as to form the tapered shape of the first concave groove 610.

In an embodiment, a depth t of the linear groove is not greater than 50% of a thickness T of the cap plate. Further, a depth t of the first concave groove 610 is not greater than 50% of a thickness T of the cap plate.

A locking portion may be formed on the inlet side of the first concave groove 610 by the secondary ring processing. Since the locking portion protrudes toward the center more than the inner surface of the first concave groove 610 such that the inner surface may form an inclined surface, the first concave groove 610 may be formed in a shape that gradually widens toward the top. In other words, the first concave groove 610 may have a conical (tapered) shape that tapers (narrows) towards the opening of the first concave groove 610. This may provide resistance to the force in the separation direction of the first protrusion 620, thereby improving the bonding force.

The volume of the first protrusion 620 may be smaller than or equal to the inner volume of the first concave groove 610. This may prevent or substantially prevent the molten resin from flowing out of the first concave groove 610 when the first protrusion 620 is melted, thereby preventing or substantially preventing the cap plate 450 and the first insulator 500 from being detached.

FIG. 8 is a view illustrating various shapes of the first concave groove of the secondary battery according to an embodiment of the present invention.

Referring to FIG. 8, the first concave groove 610 may be formed in any of various shapes. That is, the first concave groove 610 may be formed in any of various shapes, such as a circle, a slot, or a square with rounded corners.

Although not illustrated, the first concave groove 610 may be formed in any of various shapes, such as a square, a star, or the like in addition to the above-described shape.

FIG. 9 is a view schematically illustrating bonding of the first bonding part of the secondary battery according to an embodiment of the present invention.

Referring to FIG. 9, the first protrusion 620 and the first concave groove 610 according to the present invention may be bonded by thermal fusion. In a state in which the first protrusion 620 is inserted into the first concave groove 610, the first protrusion 620 may fill the first concave groove 610 by being pressed and melted, and then harden and be bonded.

Such thermal fusion may be formed in a variety of ways.

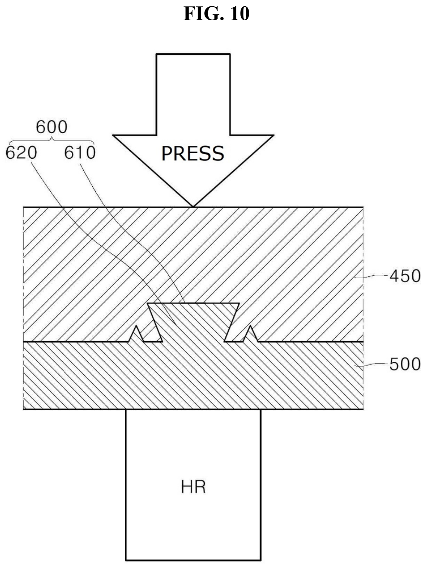

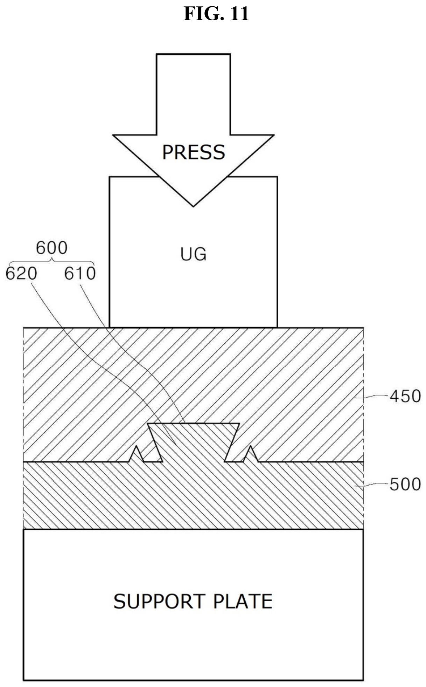

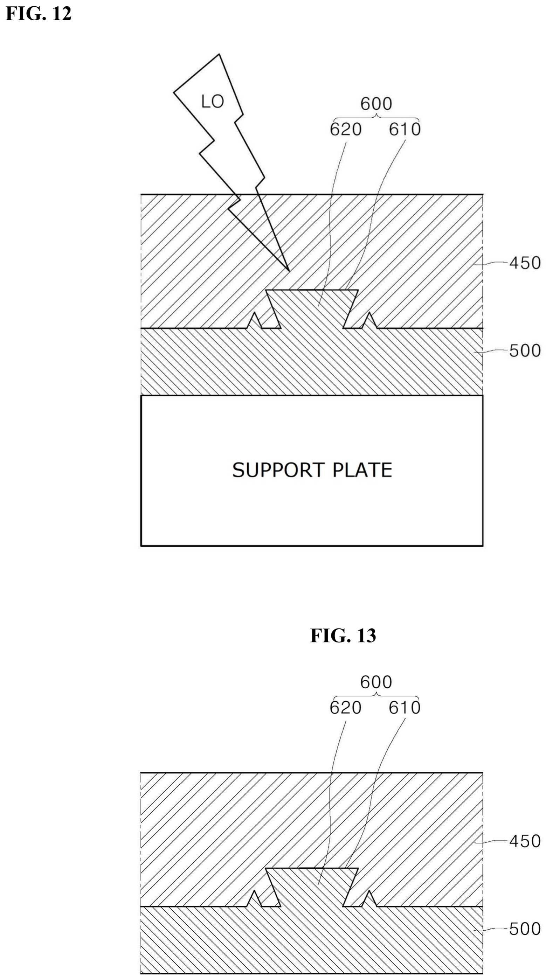

FIG. 10 is a view illustrating thermal fusion of the first bonding part of the secondary battery according to an embodiment of the present invention by a heater rod; FIG. 11 is a view illustrating thermal fusion of the first bonding part of the secondary battery according to an embodiment of the present invention by ultrasonic welding; and FIG. 12 is a view illustrating thermal fusion of the first bonding part of the secondary battery according to an embodiment of the present invention by laser welding.

Referring to FIG. 10, the first protrusion 620 and the first concave groove 610 may be thermally fused by a heater rod HR. In further detail, when the heater rod HR is disposed on the cap plate 450 made of aluminum while the first protrusion 620 is inserted into the first concave groove 610, and the first insulator 500 is pressed toward the cap plate 450, the first protrusion 620 is melted, and the molten resin fills the first concave groove 610 and hardens, such that the cap plate 450 and the first insulator 500 may be joined.

Referring to FIG. 11, the first protrusion 620 and the first concave groove 610 may be thermally fused by ultrasonic welding. Ultrasonic welding is a non-contact welding technology that combines two materials using high-frequency vibration. This method may combine mainly thermoplastic and metal parts quickly and efficiently. That is, the cap plate 450 made of aluminum and the first insulator 500 made of a plastic may be joined.

In further detail, while the first protrusion 620 is inserted, a support plate is supported on the cap plate 450 side and an ultrasonic generator UG is provided on the first insulator 500 side to generate a high-frequency electrical signal, which causes high-frequency friction on the bonding surface between the first protrusion 620 and the first concave groove 610, such that the first protrusion 620 is melted and the molten resin fills the first concave groove 610 and hardens, thereby joining the cap plate 450 and the first insulator 500.

Referring to FIG. 12, the first protrusion 620 and the first concave groove 610 may be thermally fused by laser welding. For laser welding, the first insulator 500 is made of a transparent material.

In further detail, while the first protrusion 620 is inserted into the first concave groove 610, a support plate is supported on the cap plate 450 side, a laser oscillator LO is provided on the first insulator 500 side, and by irradiating a strong laser beam, a hightemperature heat source is formed at the bonding surface between the first protrusion 620 and the first concave groove 610, such that the first protrusion 620 is melted and the molten resin fills the first concave groove 610 and hardens, thereby joining the cap plate 450 and the first insulator 500.

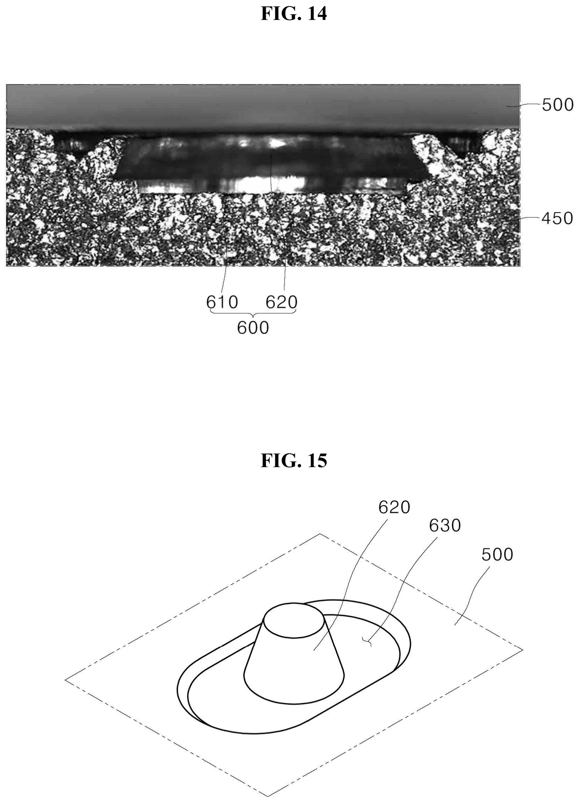

FIG. 13 is a cross-sectional view illustrating a thermally fused state of the first bonding part of the secondary battery according to an embodiment of the present invention; and FIG. 14 is a photograph of a first concave groove of the cap plate according to an embodiment of the present invention.

Referring to FIGS. 13 and 14, the first protrusion 620 may be melted and fill the first concave groove 610 by the thermal fusion process, and, after a certain period of time, the cap plate 450 and the first insulator 500 may be integrated into one component by hardening. At this time, the groove formed by the secondary ring processing is also filled with molten resin, such that the bonding force may be improved.

A second insulator 700 may be provided between the side terminal 400 and the cap plate 450. The second insulator 700 may be bonded by a second bonding part 800.

Referring to FIG. 6, the second insulator 700 according to the present embodiment may be formed of an insulating material, such as polyethylene (PE), polypropylene (PP), polyethylene terephthalate (PET), rubber, or the like. In addition, the shape of the second insulator 700 may be formed in a shape surrounding the circumferential surface of the boss terminal 410, interposed between the external terminal 420 and the cap plate 450, and surrounding a part of an outer surface of the external terminal 420.

In an embodiment, the second bonding part 800 may include a second concave groove 810, which is formed in each of the external terminal 420 and the cap plate 450 to face each other, and a second protrusion 820, which is formed on the second insulator 700 to be inserted into the second concave groove 810, and melted to fill the second concave groove 810.

In an embodiment, the second bonding part 800 may include a second concave groove 810 in the external terminal 420 and a third concave groove 830 in the cap plate 450 positioned to face the second concave groove 810, a second protrusion 820 protruding from the second insulator 700 and being inserted into the second concave groove 810 and a third protrusion 840 protruding from the second insulator 700 and being inserted into the third concave groove 830.

In an embodiment, the thermal fusion bonding between the second protrusion 820 and the second concave groove 810 is the same as the thermal fusion of the first bonding part 600 described above.

Herein, a secondary battery 2 according to another embodiment of the present disclosure will be described.

The secondary battery 2 according to the present embodiment may be configured to differ from the secondary battery 2 according to the previous embodiment of the present disclosure only in a configuration of the first bonding part 600.

Accordingly, in the description of the secondary battery 2 according to the present embodiment, only the configuration of the first bonding part 600 which is different from the secondary battery 2 according to the previous embodiment of the present disclosure will be described.

For the remaining configuration of the secondary battery 2 according to the present embodiment, the description of the secondary battery 2 according to the previous embodiment of the present invention may be applied as is.

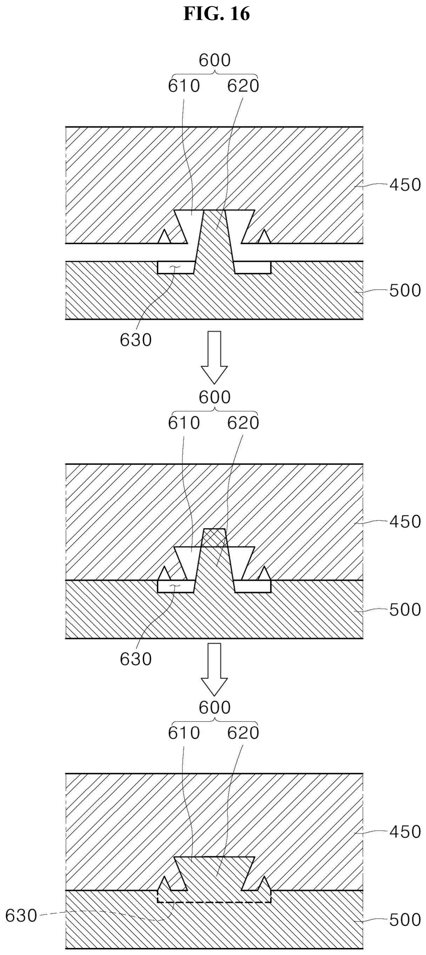

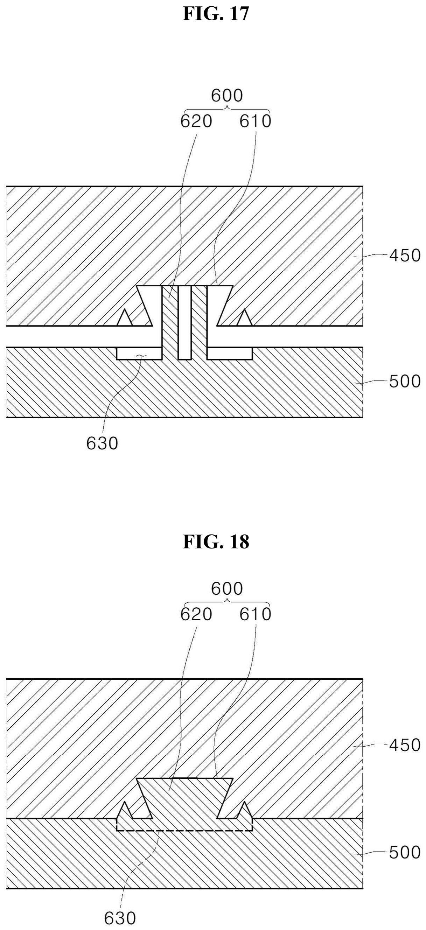

FIG. 15 is a perspective view schematically illustrating a first protrusion of the secondary battery according to another embodiment of the present invention; FIG. 16 is a view schematically illustrating bonding of the first bonding part of the secondary battery of FIG. 15; FIG. 17 is a cross-sectional view schematically illustrating a modified example of the first protrusion according to an embodiment of the present invention; and FIG. 18 is a cross-sectional view illustrating a thermally fused state of the first bonding part of the secondary battery according to an embodiment of the present invention.

Referring to FIGS. 15 to 18, the first bonding part 600 according to the present embodiment may include a first concave groove 610 formed in the cap plate 450 and a first protrusion 620 formed on the first insulator 500 to be inserted into the first concave groove 610 and melted to fill the first concave groove 610.

The first concave groove 610 may be formed in a shape that becomes wider in an insertion direction of the first protrusion 620, and the first protrusion 620 may be formed longer than the depth of the first concave groove 610.

In further detail, the first concave groove 610 may be formed in the lower surface of the cap plate 450 and the first protrusion 620 may be formed on the upper surface of the first insulator 500.

When forming the first concave groove 610, the entrance width D2 of the first concave groove 610 may be formed to be smaller than the inner width D1 of the first concave groove 610 through secondary ring processing on the outside of a linear groove after primary linear groove processing.

In an embodiment, before forming the first concave groove 610, the depth t of the linear groove is not greater than 50% of the thickness T of the cap plate. That is, the depth t of the first concave groove 610 is preferably not greater than 50% of the thickness T of the cap plate.

A locking portion may be formed on the inlet side of the first concave groove 610 by the secondary ring processing. Since the locking portion protrudes toward the center more than the inner surface of the first concave groove 610 such that the inner surface may form an inclined surface, the first concave groove 610 may be formed in a shape that gradually widens toward the top. This may provide resistance to the force in the separation direction of the first protrusion 620, thereby improving the bonding force.

In an embodiment, the volume of the first protrusion 620 may be smaller than or equal to the inner volume of the first concave groove 610. This prevents or substantially prevents the molten resin from flowing out of the first concave groove 610 when the first protrusion 620 is melted, thereby preventing or substantially preventing the cap plate 450 and the first insulator 500 from being detached.

In addition, an accommodation groove 630 for accommodating the molten resin when the first protrusion 620 is melted may be formed around the first protrusion 620.

The accommodation groove 630 may prevent the first protrusion 620 from overflowing out of the space of the first concave groove 610 when the first protrusion 620 is melted to prevent or substantially prevent the cap plate 450 and the first insulator 500 from being detached.

In an embodiment, referring to FIG. 17, a plurality of first protrusions 620 may be formed to be inserted into the first concave groove 610 and melted. Since the plurality of first protrusions 620 are formed, rapid melting is possible and the process time may be reduced.

Herein, a secondary battery 2 according to another embodiment of the present invention will be described.

The secondary battery 2 according to the present embodiment may be configured to differ from the secondary battery 2 of FIG. 2 in the configuration of the first bonding part 600.

Accordingly, in the description of the secondary battery 2 according to the present embodiment, only the detailed configuration of the first bonding part 600 which is different from the secondary battery 2 of FIG. 2 will be described.

For the remaining configuration of the secondary battery 2 according to the present embodiment, the description of the secondary battery 2 of FIG. 2 may be applied as is.

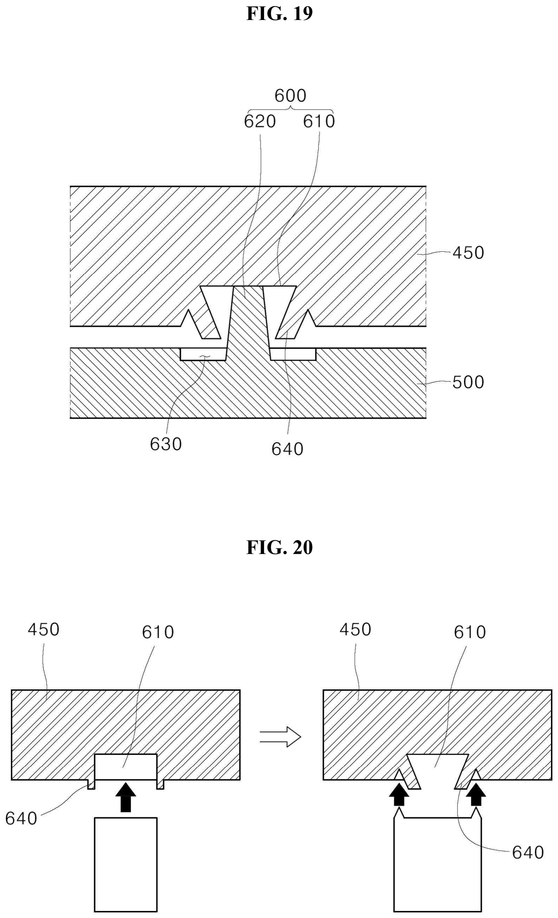

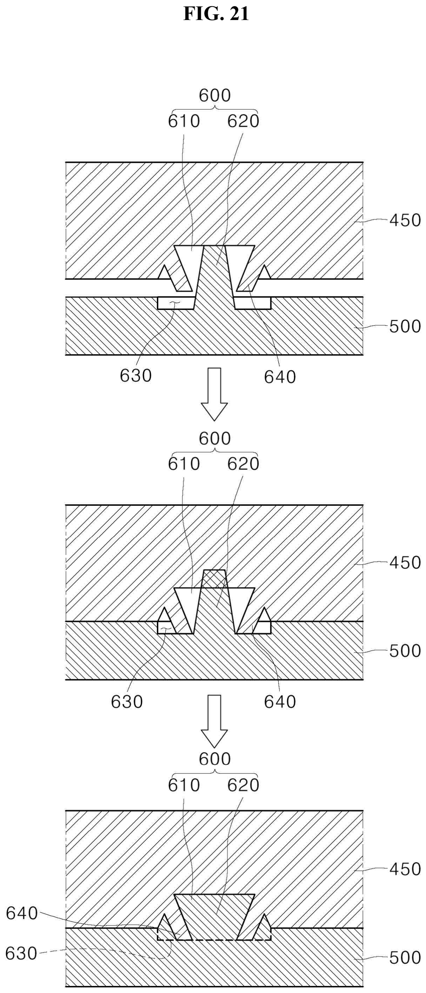

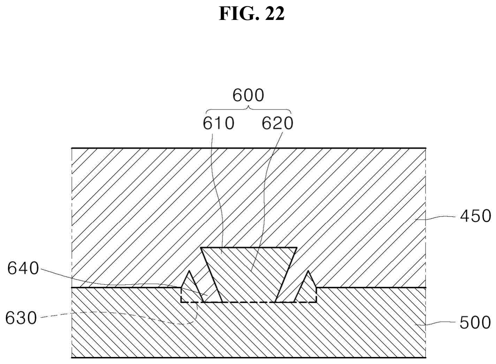

FIG. 19 is a cross-sectional view schematically illustrating the first bonding part of the secondary battery according to another embodiment of the present invention; FIG. 20 is a view schematically illustrating the formation of the first concave groove of the secondary battery of FIG. 19; FIG. 21 is a view schematically illustrating bonding of the first bonding part of the secondary battery of FIG. 19; and FIG. 22 is a cross-sectional view illustrating a thermally fused state of the first bonding part of the secondary battery of FIG. 19.

Referring to FIGS. 19 to 22, the first bonding part 600 according to the present embodiment may include a first concave groove 610 formed in the cap plate 450 and a first protrusion 620 formed on the first insulator 500 to be inserted into the first concave groove 610 and melted to fill the first concave groove 610.

The first concave groove 610 may be formed in a shape that becomes wider in an insertion direction of the first protrusion 620, and the first protrusion 620 may be formed longer than the depth of the first concave groove 610.

In further detail, the first concave groove 610 may be formed in the lower surface of the cap plate 450 and the first protrusion 620 may be formed on the upper surface of the first insulator 500.

An accommodation groove 630 for accommodating the molten resin when the first protrusion 620 is melted may be formed around the first protrusion 620.

The accommodation groove 630 may prevent or substantially prevent the first protrusion 620 from overflowing out of the space of the first concave groove 610 when the first protrusion 620 is melted to prevent or substantially prevent the cap plate 450 and the first insulator 500 from being detached.

In addition, the first concave groove 610 may include a protrusion 640 inserted into the accommodation groove 630.

When forming the first concave groove 610, the entrance width D2 of the first concave groove 610 may be formed to be smaller than the inner width D1 of the first concave groove 610 through secondary ring processing on the outside of a linear groove after primary linear groove processing.

The primary linear groove processing may form a linear groove on the inside of the protrusion 640, and the secondary ring processing may be performed on the outside of the protrusion 640, such that a locking portion including the protrusion 640 may be formed on the inlet side of the first concave groove 610. Since the locking portion including the protrusion 640 protrudes toward the center more than the inner surface of the first concave groove 610 such that the inner surface may form an inclined surface, the first concave groove 610 may be formed in a shape that gradually widens toward the top.

This may provide resistance to the force in the separation direction of the first protrusion 620, thereby improving the bonding force.

In an embodiment, before forming the first concave groove 610, the depth t of the linear groove is not greater than 50% of the thickness T of the cap plate 450. That is, the depth t of the first concave groove 610 is preferably not greater than 50% of the thickness T of the cap plate.

The volume of the first protrusion 620 may be smaller than or equal to the inner volume of the first concave groove 610. This may prevent or substantially prevent the molten resin from flowing out of the first concave groove 610 when the first protrusion 620 is melted, thereby preventing or substantially preventing the cap plate 450 and the first insulator 500 from being detached. Further, it is possible to prevent or substantially prevent the molten resin from flowing out of the first concave groove 610 by the accommodation groove 630 and improve the bonding force by the protrusion 640 accommodated in the accommodation groove 630.

In addition, the linear groove processing may be guided by the protrusion 640, and as the depth of the first concave groove 610 deepens, the resistance to the force in the separation direction increases, thereby improving the bonding force.

Herein, a method of manufacturing a secondary battery according to various embodiments of the present invention will be described.

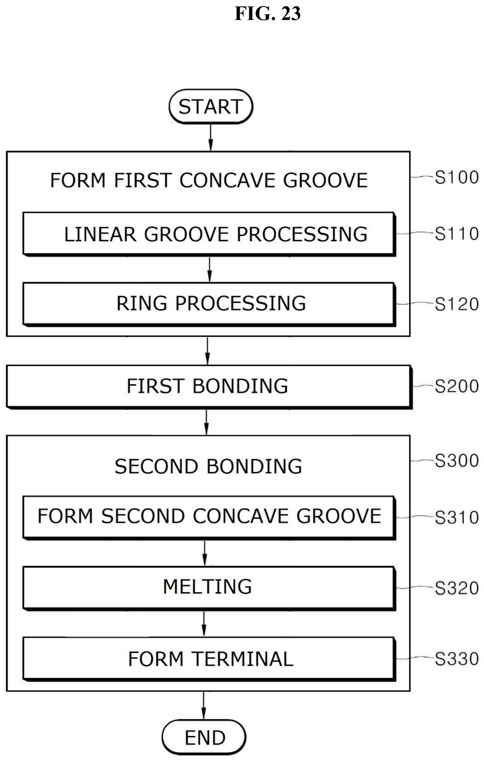

FIG. 23 is a flowchart schematically illustrating a method of manufacturing a secondary battery according to various embodiments of the present invention.

Referring to FIGS. 1 to 23, the method of manufacturing the secondary battery according to the present embodiment may include a first concave groove forming operation S100, a first bonding operation S200, and a second bonding operation S300.

First, the first protrusion 620 is integrally formed to protrude from the first insulator 500 so as to be inserted into the first concave groove 610.

The first concave groove forming operation S100 for forming the first concave groove 610 in the cap plate 450 may include a primary linear groove processing operation S110 of forming a linear groove in the lower surface of the cap plate 450 and a secondary ring processing operation S120 of forming a narrow entrance width of the linear groove by ring processing of the outside of the linear groove.

In other words, the linear groove may be formed in the bottom of the cap plate 450 made of aluminum by pressing, and the locking portion may be formed on the entrance side of the linear groove by ring processing to surround the linear groove on the outside of the linear groove to form the first concave groove 610. The entrance width D2 of the first concave groove 610 may be formed to be smaller than an inner width D1.

Thereafter, the first bonding operation S200 is performed. The first bonding operation S200 is for bonding the first insulator 500 to the cap plate 450, and by inserting the first protrusion 620 of the first insulator 500 into the first concave groove 610, melting the first protrusion 620, and filling and hardening the molten resin in the first concave groove 610, the first insulator 500 may be integrated into the cap plate 450 as a single component.

In an embodiment, the melting of the first protrusion 620 may be achieved by melting by the heater rod HR as illustrated in FIG. 10, melting by the ultrasonic generator UG as illustrated in FIG. 11, or melting by the laser oscillator LO as illustrated in FIG. 12.

The first protrusion 620 and the first concave groove 610 may be thermally fused through the melting of the first protrusion 620.

In an embodiment, the volume of the first protrusion 620 may be smaller than or equal to the inner volume of the first concave groove 610. This may prevent or substantially prevent the molten resin from overflowing to the outside of the first concave groove 610 when the first protrusion 620 is melted in the first bonding operation S200 to be described below.

Meanwhile, as illustrated in FIGS. 15 to 18, the accommodation groove 630 may be formed around the first protrusion 620. When the first protrusion 620 is melted, the accommodation groove 630 may prevent or substantially prevent the first protrusion 620 from overflowing out of the space of the first concave groove 610. Accordingly, the cap plate 450 and the first insulator 500 may be tightly bonded to each other, thereby preventing or substantially preventing detachment or the like.

Thereafter, the second bonding operation S300 is performed. The second bonding operation S300 is for bonding the cap plate 450 and the side terminal 400, and may include a second concave groove forming operation S310, a melting operation S320, and a terminal forming operation S330.

In this case, by bonding the cap plate 450 and the side terminal 400, the side terminal 400 may include the boss terminal 410 formed on the connection member 300 to pass through the cap plate 450 and the external terminal 420 positioned on the outside of the cap plate 450 and bonded to the boss terminal 410.

In the second concave groove forming operation S310, when forming a second concave groove 810 facing each of the cap plate 450 and the external terminal 420, the second concave groove 810 facing the upper surface of the cap plate 450 and the lower surface of the external terminal is formed by pressing.

In addition, in the melting operation S320, the second protrusion 820 formed on the second insulator 700 is inserted into the second concave groove 810 between the cap plate 450 and the external terminal 420, and the second protrusion 820 is melted to fill the second concave groove 810 to integrate the external terminal 420 and the cap plate 450 into one part through the second insulator 700. In other words, in the melting operation S320, the second protrusion 820 and third protrusion 840 formed on the second insulator 700 are inserted into the second concave groove 810 and third concave groove 830, respectively, and both are melted to fill the second and third concave grooves 810 and 830 to integrate the external terminal 420 and the cap plate 450 into one part through the second insulator 700.

Thereafter, the terminal forming operation S330 is for integrating the boss terminal 410 and the external terminal 420 by welding, and the tapered portions 430 corresponding to the upper portion of the boss terminal 410 and the inside of the external terminal 420 are joined by welding to form the side terminal 400.

Accordingly, the first insulator 500, the second insulator 700, and the side terminal 400 may be integrated into a single component in the cap plate 450. The cap plate 450 integrated into a single component as described above may be coupled to the case 100.

According to one or more embodiments of the present invention, unnecessary processes may be eliminated by integrating an insulator for insulating a cap plate and an electrode assembly by thermal fusion, thereby simplifying the assembly process and improving insulation reliability.

According to one or more embodiments of the present invention, a conventional insulation part and a cap plate are integrated by thermal fusion rather than insert injection, thereby reducing manufacturing costs.

According to one or more embodiments of the present disclosure, a secondary battery includes: an electrode assembly including an electrode tab; a case in which the electrode assembly is accommodated; a connection member electrically connected to the electrode tab; a side terminal electrically connected to the connection member; a cap plate coupled to an opening of the case and through which the side terminal passes; a first insulator insulating the cap plate from the connecting member; and a first bonding part bonding the first insulator and the cap plate.

The first bonding part may include: a first concave groove in the cap plate; and a first protrusion on the first insulator to be inserted into the first concave groove and melted to fill the first concave groove.

The first concave groove may have a shape that becomes wider in an insertion direction of the first protrusion, and the first protrusion may be longer than a depth of the first concave groove.

A volume of the first protrusion may be less than or equal to an inner volume of the first concave groove.

An entrance width of the first concave groove may be less than an inner width of the first concave groove through secondary ring processing of an outside of a linear groove after primary linear groove processing.

An accommodation groove which accommodates a molten material when the first protrusion is melted, may be formed around the first protrusion.

The first concave groove may include a protrusion inserted into the accommodation groove.

An entrance width of the first concave groove may be smaller than an inner width of the first concave groove through secondary ring processing of an outside of the protrusion after primary linear groove processing of an inside of the protrusion.

The side terminal may include a boss terminal on the connection member by passing through the cap plate; and an external terminal on an outside of the cap plate and welded to the boss terminal, and a second insulator is between the side terminal and the cap plate.

The second insulator may be bonded by a second bonding part, and the second bonding part may include: a second concave groove formed in each of the external terminal and the cap plate so as to face each other; and a second protrusion formed on the second insulator to be inserted into the second concave groove and melted to fill the second concave groove.

The boss terminal and the external terminal may include tapered portions corresponding to each other.

According to one or more embodiments of the present disclosure, a method of manufacturing a secondary battery includes: forming a first concave groove in a cap plate; bonding a first insulator to the cap plate; and bonding the cap plate and a side terminal.

The forming the first concave groove in the cap plate may include: forming a linear groove in a lower surface of the cap plate; and forming an entrance width of the linear groove to be narrower by ring processing of an outside of the linear groove.

In the bonding the first insulator to the cap plate, a first protrusion of the first insulator may be inserted into the first concave groove, and the first protrusion may be melted to fill the first concave groove with a molten resin, which subsequently hardens.

A volume of the first protrusion may be smaller than or equal to an inner volume of the first concave groove.

An accommodation groove, which accommodates a molten material when the first protrusion is melted, may be formed around the first protrusion.

In the bonding the first insulator to the cap plate, the first protrusion may be melted and thermally fused by a heater rod arranged on the cap plate.

In the bonding the first insulator to the cap plate, the first protrusion may be melted and thermally fused by ultrasonic welding applied to the first insulator.

In the bonding the first insulator to the cap plate, the first insulator may be transparent, and the first protrusion may be melted and thermally fused by laser welding applied to the first insulator.

The side terminal may include a boss terminal formed on a connection member by passing through the cap plate, and an external terminal positioned on an outside of the cap plate and bonded to the boss terminal, and the bonding the cap plate and the side terminal may include: forming a second concave groove facing the cap plate and the external terminal; inserting a second protrusion of a second insulator into the second concave groove and melting the second protrusion such that the molten resin fills the second concave groove; and welding the boss terminal and the external terminal.According to one or more embodiments of the present invention, by forming a narrow entrance width such that a shape of a groove in which a protrusion of an insulator is melted and fills has resistance to a force in a separation direction, a bonding force can be improved to reduce product defects, and product reliability can be improved.

However, aspects and effects obtainable through the present disclosure are not limited to the above aspects and effects, and other aspects and technical effects that are not mentioned will be clearly understood by those skilled in the art from the following description of the present disclosure.

While the present disclosure has been described with reference to some example embodiments shown in the drawings, these embodiments are merely illustrative and it is to be understood that various modifications and equivalent other embodiments can be derived by those skilled in the art on the basis of the embodiments. Therefore, the technical scope of the present disclosure is defined by the appended claims.

## Claims

1. A secondary battery (2) comprising:
an electrode assembly (200) comprising an electrode tab (202);
a case (100) in which the electrode assembly (200) is accommodated;
a connection member (300) electrically connected to the electrode tab (202);
a side terminal (400) electrically connected to the connection member (300);
a cap plate (450) coupled to an opening (118) of the case (100) and through which the side terminal (400) passes;
a first insulator (500) configured to insulate the cap plate (450) from the connecting member; and
a first bonding part (600) configured to bond the first insulator (500) and the cap plate (450), wherein the first bonding part (600) comprises:
a first concave groove (610) in the cap plate (450); and
a first protrusion (620) protruding from the first insulator (500) and being inserted into the first concave groove (610).

2. The secondary battery (2) as claimed in claim 1, wherein the first concave groove (610) has a shape that becomes wider in an insertion direction of the first protrusion (620).

3. The secondary battery (2) as claimed in one of claims 1 or 2, wherein a volume of the first protrusion (620) is smaller than or equal to an inner volume of the first concave groove (610).

4. The secondary battery (2) as claimed in one of the preceding claims, wherein an entrance width (D2) of the first concave groove (610) is smaller than an inner width (D1) of the first concave groove (610).

5. The secondary battery (2) as claimed in one of the preceding claims, wherein the first insulator (500) comprises an accommodation groove (630) configured to accommodate a portion of the first protrusion (620).

6. The secondary battery (2) as claimed in claim 5, wherein the cap plate (450) comprises a protrusion (640) at the edge of the first concave groove (610) and the protrusion (640) being inserted into the accommodation groove (630) of the first insulator (500).

7. The secondary battery (2) as claimed in one of the preceding claims, wherein the side terminal (400) comprises:
a boss terminal (410) arranged on the connection member (300) and passing through the cap plate (450); and
an external terminal (420) on an outside of the cap plate (450) and welded to the boss terminal (410), and
a second insulator (700) is between the side terminal (400) and the cap plate (450).

8. The secondary battery (2) as claimed in claim 7, wherein the second insulator (700) is bonded by a second bonding part (800), and
the second bonding part (800) comprises:
a second concave groove (810) in the external terminal (420) and a third concave groove (830) in the cap plate (450) positioned to face the second concave groove (810);
a second protrusion (820) protruding from the second insulator (700) and being inserted into the second concave groove (810); and
a third protrusion (840) protruding from the second insulator (700) and being inserted into the third concave groove (830).

9. The secondary battery (2) as claimed in claim 8, wherein the boss terminal (410) and the external terminal (420) comprise tapered portions (430) corresponding to each other.

10. A method of manufacturing the secondary battery (2) according to one of the preceding claims, the method comprising:
forming a first concave groove (610) in a cap plate (450);
bonding a first insulator (500) to the cap plate (450); and
bonding the cap plate (450) and a side terminal (400),
wherein the bonding of the first insulator (500) to the cap plate (450) comprises:
inserting a first protrusion (620) of the first insulator (500) into the first concave groove (610),
melting the first protrusion (620) to fill the first concave groove (610), and subsequent cooling to harden the inserted first protrusion (620).

11. The method as claimed in claim 10, wherein the forming of the first concave groove (610) comprises:
forming a linear groove in a lower surface of the cap plate (450); and
forming an entrance width (D2) of the linear groove to be narrower by ring processing of an outside of the linear groove.

12. The method as claimed in claim 10 or 11, wherein before inserting the first protrusion (620), the method comprises:
providing the first protrusion (620), the first protrusion (620) being longer than a depth (t) of the first concave groove (610).

13. The method as claimed in one of claims 10 to 12, wherein the side terminal (400) comprises a boss terminal (410) on a connection member (300) by passing through the cap plate (450), and
an external terminal (420) positioned on an outside of the cap plate (450) and bonded to the boss terminal (410), and
the bonding the cap plate (450) and the side terminal (400) comprises:
forming a second concave groove (810) in the external terminal (420) and forming a third concave groove (830) in the cap plate (450) positioned to face the second concave groove (810);
inserting a second protrusion (820) of a second insulator (700) into the second concave groove (810) and inserting a third protrusion (840) into the third concave groove (830);
melting the second protrusion (820) and the third protrusion (840) to fill the second concave groove (810) and the third concave groove (830) respectively;
subsequent cooling to harden the inserted second and third protrusion (820, 840); and
welding the boss terminal (410) and the external terminal (420).
